# EUROPÄISCHE PATENTSCHRIFT

(11) **EP 3 077 683 B1**
(45) Veröffentlichungstag und Bekanntmachung des Hinweises auf die Patenterteilung: **18.09.2019**
(21) Anmeldenummer: 14802459.9
(22) Anmeldetag: 25.11.2014
(51) Int. Cl.: F16B 13/12, F16B 13/04

(54) **SPREIZDÜBEL MIT SPREIZBEREICH MIT EINSTICHEN**
EXPANSION DOWEL WITH EXPANSION AREA WITH RECESSES
PITON À EXPANSION DOTÉ D'UNE ZONE D'EXPANSION À ENCOCHES

(30) Priorität: 03.12.2013 EP 13195462
(43) Veröffentlichungstag der Anmeldung: 12.10.2016
(73) Patentinhaber: Hilti Aktiengesellschaft, 9494 Schaan (LI)
(72) Erfinder: POPP, Franz, 86807 Buchloe (DE); ROSENKRANZ, Falk, CH-9658 Wildhaus (CH); BRUNHUBER, Thomas, A-6811 Göfis (AT); BOECKLE, Juergen, CH-9494 Schaan (LI); TURSKI, Martin, CH-8880 Walenstadt (CH)
(74) Vertreter: Hilti Aktiengesellschaft Corporate Intellectual Property
(86) Internationale Anmeldenummer: PCT/EP2014/075514
(87) Internationale Veröffentlichungsnummer: WO 2015/082255

(56) Entgegenhaltungen:
- EP-A1- 1 248 000
- EP-A2- 0 163 604
- DE-A1- 3 101 472
- DE-A1- 3 241 158

## Beschreibung

Die Erfindung betrifft einen Spreizdübel, insbesondere aus Kunststoff, gemäss dem Oberbegriff des Anspruchs 1. Ein solcher Spreizdübel ist ausgestattet mit einem Schaft, der einen Halsbereich und einen Spreizbereich aufweist, wobei der Spreizbereich axial versetzt zum Halsbereich angeordnet ist, und einem Spreizkanal, der den Halsbereich und den Spreizbereich des Schafts, insbesondere axial, durchläuft, wobei der Schaft im Spreizbereich durch Einführen eines Expansionselements in den Spreizkanal zum Verankern des Spreizübels in einem Bohrloch radial aufweitbar ist, wobei der Spreizkanal im Spreizbereich ausschliesslich durch Einstiche gebildet ist, die vom Schaftumfang ausgehen und in das Schaftinnere führen, und wobei der Spreizkanal in zumindest einer Querschnittsebene des Spreizbereichs durch zwei in der Querschnittsebene zumindest teilweise versetzt zueinander verlaufende Einstiche gebildet wird, die von in der Querschnittsebene entgegengesetzt liegenden Bereichen des Schaftumfangs ausgehen. Die Erfindung betrifft ferner ein Spritzgusswerkzeug zum Herstellen eines solchen Spreizdübels.

Die DE3241158A1 betrifft einen Dübel aus Kunststoff mit einem Verankerungsteil, wobei das Verankerungsteil des Dübels ohne Kernnadel gespritzt werden kann. Das Verankerungsteil weist einen in Axialrichtung durchlaufenden Führungskanal auf und ist auf seiner Länge in mehrere zusammenhängende Spreizzonen aufgeteilt. Jede Spreizzone weist einen vom Mantel des Verankerungsteils ausgehenden Einstich auf, dessen Lage von Spreizzone zu Spreizzone um die Dübelachse herum drehversetzt ist. In Axialrichtung sind die Längen der Einstiche gleich den Längen der jeweiligen Spreizzone. Die Vertiefungen haben jeweils in Mantelumfangsrichtung eine Ausdehnung, die der Projektion des Führungskanals auf die Mantelfläche entspricht.

Weitere Dübel sind aus der DE 32 48 141 A1 bekannt. Gemäss DE 32 48 141 A1 kann der Führungskanal für die Spreizschraube durch einander überlappende Längsschlitze gebildet werden. Die Längsschlitze können durch Radialschieber hergestellt werden und es kann mit einer kurzen Kernnadel gearbeitet werden. Ein anderer Dübel, bei dem die zentrale Ausnehmung durch überlappende Längsschlitze gebildet wird, geht aus der DE 1 292 947 B hervor.

Andere Kunststoffdübel sind aus der DE 3101472 A1, der EP 0163604 A2 und der EP 1248000 A1 bekannt.

Aufgabe der Erfindung ist es, einen Spreizdübel anzugeben, der bei besonders geringem Herstellungsaufwand und hoher Zuverlässigkeit besonders gute Lastwerte erzielt und besonders gut setzbar ist.

Die Aufgabe wird erfindungsgemäss durch einen Kunststoff-Spreizdübel mit den Merkmalen des Anspruchs 1 und ein Spritzgusswerkzeug zum Herstellen eines solchen Spreizdübels mit den Merkmalen des Anspruchs 10 gelöst. Bevorzugte Ausführungsformen des Dübels sind in den abhängigen Ansprüchen angegeben.

Ein erfindungsgemässer Spreizdübel ist dadurch gekennzeichnet, dass eine Stirnseite zumindest eines der beiden Einstiche zumindest zwei Kontaktfacetten für das Expansionselement bildet.

Bei einem gattungsgemässen Spreizdübel ist vorgesehen, dass der Spreizkanal in zumindest einer Querschnittsebene des Spreizbereichs durch zwei Einstiche gebildet wird, die von in der Querschnittsebene entgegengesetzt liegenden Bereichen, insbesondere diametral entgegengesetzt liegenden Bereichen, des Schaftumfangs ausgehen.

Ein erster Grundgedanke der Erfindung kann darin gesehen werden, dass der Dübel an zumindest einer Axialposition im Spreizbereich einen Querschnitt aufweist, in welchem der Spreizkanal nicht nur durch einen einzigen Einstich gebildet wird, sondern durch zwei Einstiche, die von verschiedenen, insbesondere entgegengesetzten Bereichen am Schaftumfang ausgehen und in das Innere des Dübels reichen. An dieser zumindest einen Axialposition überlappen sich also zwei Einstiche axial und bilden im Querschnitt gemeinsam den Spreizkanal.

Gemäss der DE 3241158 A1 wird der Spreizkanal an jeder Axialposition des Spreizbereichs durch genau einen Einstich gebildet. Damit hat jede Spreizzone des Spreizbereichs im Querschnitt genau ein zusammenhängendes, U-förmiges Spreizelement. Im Gegensatz hierzu wird der Spreizkanal bei einem gattungsgemässen Dübel zumindest bereichsweise durch zwei Einstiche gebildet, die von im Schaftquerschnitt entgegengesetzten Bereichen des Schaftumfangs ausgehen und sich im Schaftinneren unter Bildung des Spreizkanalquerschnitts treffen. Demgemäss sind bei einem gattungsgemässen Dübel im Querschnitt des Spreizbereichs zwei separate, segmentartige Spreizelemente gebildet. Diese separaten Spreizelemente können ein in Umfangsrichtung besonders gleichmässiges Aufspreizen ermöglichen, und sie können darüber hinaus besonders biegeweich sein, was sich beides positiv auf die Verankerung auswirken kann und damit die Lastwerte erheblich verbessern kann. Ferner kann mit der gattungsgemässen Geometrie in besonders einfacher Weise ein lediglich punktueller Kontakt zwischen dem Expansionselement und dem Schaft im Spreizbereich realisiert werden, wodurch die Reibung beim Einbringen des Expansionselements reduziert und somit die Produktivität beim Setzen des Dübels erhöht werden kann. Dabei kann der Spreizbereich aber weiterhin ähnlich DE 3241158 A1 ohne Kernnadel gespritzt und ausschliesslich durch Einstechen von die Einstiche bildenden Dornen in den Umfang des Schafts geformt werden.

Soweit hier von "radial", "axial", "diametral" und/oder "Umfangsrichtung" die Rede ist, kann sich dies, insbesondere sofern nicht anders erläutert, auf die Längsachse des Schafts beziehen. Die Längsachse des Schafts verläuft vorzugsweise parallel, insbesondere koaxial, zum Spreizkanal und/oder durch den Spreizkanal hindurch. Die Querschnittsebene oder die Querschnittsebenen verläuft beziehungsweise verlaufen insbesondere senkrecht zur Längsachse des Schafts und/oder senkrecht zur Längserstreckung des Spreizkanals. Der Schaft besteht vorzugsweise aus einem Kunststoffmaterial. Spreizbereich und Halsbereich des Schafts sind vorzugsweise einstückig ausgebildet, was die Herstellung vereinfachen kann.

Die Einstiche bilden vorzugsweise jeweils den Abdruck eines Dorns, der vom Schaftumfang aus in den Schaft eingedrückt worden ist und anschliessend wieder herausgezogen worden ist. In diesem Fall können die Einstiche in einem Spritzgussverfahren in besonders einfacher Weise hergestellt werden. Vorzugsweise weisen die Einstiche keine Hinterschneidungen aus, so dass ein besonders einfaches Entformen der Dorne möglich ist.

Geeigneterweise ist der Schaftumfang im Spreizbereich und/oder Halsbereich zumindest annähern zylindrisch ausgebildet. Das Verankern des Dübels in einem Bohrloch durch radiales Aufweiten des Spreizbereichs kann insbesondere beinhalten, dass im Spreizbereich angeordnete Spreizelemente des Dübels vom Expansionselement radial an die, vorzugsweise zylindrische, Wand des Bohrlochs angepresst werden. Vorzugsweise nimmt Querschnitt des Spreizkanals im Spreizbereich mit zunehmendem Abstand vom Halsbereich, zumindest schrittweise, ab.

Das Expansionselement kann insbesondere stiftförmig ausgeführt sein. Es kann beispielsweise eine Schraube oder ein Eintreibdorn sein. Insbesondere kann vorgesehen sein, dass der Schaft im Spreizbereich durch Einführen eines zumindest annähernd zylindrischen Bereichs oder exakt zylindrischen Bereichs des Expansionselements in den axial innerhalb des Spreizbereichs liegenden Abschnitt des Spreizkanals zum Verankern des Dübels im Bohrloch radial aufweitbar ist. Das Expansionselement kann beispielsweise aus einem Kunststoffmaterial, einem Metallmaterial oder einer Kombination hiervon bestehen. Das Expansionselement kann als Bestandteil des Dübels oder als separates Teil betrachtet werden.

Der Halsbereich wird durch Einführen des Expansionselements in den Spreizkanal zweckmässigerweise nicht oder allenfalls bereichsweise radial aufgeweitet. Zusätzlich zu dem beschriebenen Spreizbereich kann der Spreizdübel unter Umständen auch einen oder mehrere Zusatzspreizbereiche aufweisen, die ebenfalls durch Einführen des Expansionselements in den Spreizkanal zum Verankern des Dübels im Bohrloch radial aufweitbar sind, die aber geometrisch verschieden ausgestaltet sein können. Der zumindest eine Zusatzspreizbereich ist geeigneterweise axial versetzt zum Spreizbereich angeordnet, kann aber unmittelbar an diesen angrenzen.

Der Spreizkanal kann durchgängig ausgeführt sein. Er kann aber auch, insbesondere fertigungsbedingt, eine oder mehrere vom Expansionselement durchstossbare Membranen aufweisen. Insbesondere kann eine Membran am Übergang zwischen dem Halsbereich und dem Spreizbereich vorgesehen sein, insbesondere wenn der Halsbereich durch eine Kernnadel und der Spreizbereich ohne Kernnadel geformt wird. Die Membran kann dann an der Stirnseite der Kernnadel gebildet werden. Eine Membran kann beispielsweise auch zwischen zwei im Querschnitt des Schafts benachbarten Einstichen vorgesehen sein, die zusammen den Querschnitt des Spreizkanals bilden. Eine solche Membran kann entstehen, wenn sich die gegenüberliegenden Dorne des Spritzgusswerkzeugs nicht berühren, sondern wenn zwischen ihnen ein Toleranzspalt verbleibt. Die beiden Einstiche, welche in der Querschnittsebene des Spreizbereichs den Spreizkanal bilden, können also in der Querschnittsebene ineinander übergehen, oder sie können durch eine vom Expansionselement durchstossbare Membran getrennt sein.

Besonders bevorzugt ist es, dass die beiden Einstiche zumindest bereichsweise prismenförmig oder pyramidenstumpfförmig sind, vorzugsweise jeweils mit rechteckiger Grundfläche. Durch eine solche Form kann der Spreizkanal in geometrisch besonders einfacher Weise gefertigt werden, wobei eine sich zum Schaftumfang hin aufweitende Pyramidenstumpfform das Entformen des jeweiligen Dorns unterstützen kann. Vorzugsweise kann vorgesehen sein, dass eine erste Seite der rechteckigen Grundfläche parallel zur Längsachse des Schafts verläuft und/oder dass eine zweite Seite senkrecht zur Längsachse des Schafts verläuft. Insbesondere kann die erste Seite der rechteckigen Grundfläche, die parallel zur Längsachse des Schafts verläuft, eine lange Rechteckseite und die zweite Seite seine kurze Rechteckseite sein, die kürzer als die lange Rechteckseite ist. Grundsätzlich könnte die rechteckige Grundfläche auch quadratisch sein. Nach aussen, das heisst zum Schaftumfang hin, kann die Symmetrie der einzelnen Einstiche abnehmen. Die beiden Einstiche können in der Querschnittsebene parallel zueinander verlaufen.

Nach der Erfindung ist vorgesehen, dass die beiden Einstiche in der Querschnittsebene zumindest teilweise, vorzugsweise vollständig, versetzt zueinander verlaufen. Gemäss dieser Ausführungsform fluchten die beiden Einstiche allenfalls teilweise, vorzugsweise überhaupt nicht. Dabei bilden die Einstiche nicht nur an ihren Mantelflächen, sondern auch an ihren Stirnseiten Kontaktfacetten für das Expansionselement, so dass eine besonders gleichmässige Kraftverteilung beim Verspreizen des Spreizbereichs möglich wird.

Vorzugsweise wird in der Querschnittsebene zumindest einer der beiden Einstiche durch einen von der Längsachse des Schafts ausgehenden Radius begrenzt. Insbesondere können beide Einstiche jeweils durch einen von der Längsachse des Schafts ausgehenden Radius begrenzt werden. Infolge dieser Ausgestaltung wird beim Aufspreizen besonders viel Material radial verdrängt, so dass eine besonders gute Verankerung gegeben ist.

Eine andere vorteilhafte Ausgestaltung liegt darin, dass die Stirnseite zumindest eines der beiden Einstiche bereichsweise abgeschrägt ist. Hierdurch kann die Querschnittsform des Spreizkanals noch besser an eine Kreisform angenähert und somit eine noch symmetrischere Kraftverteilung beim Aufspreizen des Spreizbereichs ermöglicht werden.

Erfindungsgemäss bildet die Stirnseite zumindest eines der beiden Einstiche zumindest zwei Kontaktfacetten für das Expansionselement. Vorzugsweise weist dieser Einstich insgesamt zumindest drei Kontaktfacetten für das Expansionselement auf, nämlich zumindest zwei an der Stirnseite und zumindest eine am Mantel des Einstichs. Die einzelnen Kontaktfacetten des Einstichs verlaufen in der Querschnittsebene des Spreizbereichs bevorzugt winklig zueinander. Die Stirnseite befindet sich insbesondere an dem Ende des Einstichs, das dem schaftumfangsseitigen Ende des Einstichs entgegengesetzt ist.

Insbesondere für eine noch bessere Krafteinleitung sind zweckmässigerweise die Stirnseiten beider Einstiche jeweils bereichsweise abgeschrägt. Vorzugsweise können die Stirnseiten beider Einstiche jeweils zumindest zwei Kontaktfacetten für das Expansionselement bilden, und/oder können beide Einstiche jeweils zumindest drei Kontaktfacetten für das Expansionselement aufweisen, nämlich jeweils zumindest zwei an der jeweiligen Stirnseite und jeweils zumindest eine am Mantel des jeweiligen Einstichs.

An den besagten Kontaktfacetten kann das Expansionselement zum Aufspreizen des Schafts im Spreizbereich radial nach aussen gerichteten Druck auf den Schaft ausüben.

Weiterhin ist es vorteilhaft, dass die beiden Einstiche in der Querschnittsebene zumindest bereichsweise drehsymmetrisch sind. Vorzugsweise können die Einstiche zumindest im Bereich der Längsachse des Schafts drehsymmetrisch sein, das heisst insbesondere kann es in der Querschnittsebene einen Kreis geben, durch den die Längsachse, insbesondere koaxial, hindurchläuft, und in dem die beiden Einstiche drehsymmetrisch sind. Nach aussen zum Schaftumfang hin kann die Symmetrie aufrechterhalten werden, oder es kann von ihr abgewichen werden. Die Drehsymmetrie kann insbesondere bezogen auf die Längsachse und/oder bei Drehung um 180° gegeben sei, das heisst die drehsymmetrische Anordnung der beiden Einstiche kann insbesondere beinhalten, dass eine Drehung des ersten Einstichs um 180° um die Längsachse herum den zweiten Einstich ergibt. Die Drehsymmetrie kann für eine noch gleichmässigere Kraftverteilung sorgen.

Insbesondere kann vorgesehen sein, dass der Spreizbereich zumindest eine axial ausgedehnte Spreizzone aufweist, wobei der Spreizkanal in jeder Querschnittsebene der Spreizzone durch die beiden Einstiche gebildet wird, und wobei die beiden Einstiche in jeder Querschnittsebene der Spreizzone von entgegengesetzt liegenden Bereichen des Schaftumfangs ausgehen. Gemäss dieser Ausführungsform können die zuvor beschriebenen Merkmale nicht nur in einer einzigen Querschnittsebene, sondern in mehreren in Axialrichtung unmittelbar benachbarten Querschnittsebenen gegeben sein, das heisst der Spreizkanal wird entlang einer in Axialrichtung ausgedehnten Spreizzone durch die beiden Einstiche gebildet. Hierdurch kann ein konstruktiv besonders einfacher Spreizbereich erhalten werden.

Grundsätzlich könnte nur eine einzige Spreizzone vorgesehen sein. Besonders bevorzugt ist es jedoch, dass der Spreizbereich mehrere axial versetzte Spreizzonen aufweist, wobei der Spreizkanal in jeder der Spreizzonen durch jeweils zwei Einstiche gebildet wird, die jeweils von entgegengesetzt liegenden Bereichen des Schaftumfangs ausgehend, wobei die Einstiche zumindest zweier benachbarter Spreizzonen in Umfangsrichtung des Schafts zumindest bereichsweise, vorzugsweise vollständig, zueinander versetzt sind. Durch mehrere Spreizzonen mit unterschiedlicher Geometrie kann eine noch bessere Verankerung erzielt werden.

Weiterhin ist es zweckmässig, dass zumindest ein Teil der Einstiche längs des Schafts periodisch angeordnet ist. Beispielsweise können die Einstiche am Schaftumfang zwei Rechteckfunktionen bilden.

Eine andere zweckmässige Ausgestaltung der Erfindung liegt darin, dass der Spreizkanal am Übergang zwischen dem Halsbereich und dem Spreizbereich eine Einschnürung oder eine vom Expansionselement durchstossbare Membran aufweist. Eine solche Einschnürung beziehungsweise eine solche Membran kann eine Vielzahl von vorteilhaften Aufgaben übernehmen, zum Beispiel eine Einschlagsperre für das Expansionselement bilden, das Expansionselement zentrieren, eine Anschneidgeometrie für das Eindrehen eines als Schraube ausgebildeten Expansionselement bilden und/oder das Expansionselement im Schaft fixieren. Dabei kann die Einschnürung beziehungsweise die Membran bei einer erfindungsgemässen Geometrie des Spreizdübels besonders einfach gefertigt werden: Da nämlich der Spreizbereich erfindungsgemäss vorzugsweise ohne Kernnadel nur durch Dorne gefertigt werden kann, die an seitlichen Schiebern angeordnet sind, muss eine den Halsbereich bildende Kernnadel nicht bis in den Spreizbereich reichen, und die Einschnürung beziehungsweise die Membran kann stirnseitig an der Kernnadel ausgebildet werden. Die Einschnürung kann radial innenseitig eine aufgabenoptimiert ausgestaltete Durchbrechung aufweisen, beispielsweise mit einer kreisförmigen oder mehreckigen Geometrie.

Der Spreizdübel kann insbesondere ein Dämmstoffdübel zur Befestigung von Dämmstoffplatten an einer Unterkonstruktion sein. Insbesondere kann er einen am Schaft angeordneten Halteteller zum Sichern einer Dämmstoffplatte am Schaft aufweisen. Der Spreizdübel kann aber beispielsweise auch ein Rahmendübel sein.

Soweit hier ein Merkmal im Zusammenhang mit nur einem Einstich beschrieben ist, kann dieses Merkmal auch für mehrere Einstiche oder für sämtliche Einstiche gelten. Soweit hier ein Merkmal im Zusammenhang mit nur einer Spreizzone beschrieben ist, kann dieses Merkmal auch für mehrere Spreizzonen oder für sämtliche Spreizzonen gelten.

Die Erfindung betrifft auch ein Spritzgusswerkzeug zum Herstellen eines erfindungsgemässen Spreizdübels. Das Spritzgusswerkzeug besteht aus zwei Formhälften und einer Kernnadel, wobei die Formhälften und die Kernnadel eine Negativform des Spreizdübels bilden. Die Dorne zum Formen der Einstiche können dabei an den beiden Formhälften ausgebildet sein.

Die Erfindung erlaubt in besonders einfacher Weise eine Optimierung des Spreizbereichs auf verschiedene Untergründe durch Variation der Geometrie der Dorne und damit der Geometrie des Spreizkanals. Beispielsweise kann für Hohluntergründe ein besonders weites Aufspreizen vorgesehen werden, für feste Untergründe hingegen ein gleichmässiges Aufspreizen über der gesamten Spreizbereichslänge.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer Ausführungsform eines erfindungsgemässen Dübels;
- Figur 2:: eine teildurchscheinende Seitenansicht des Dübels aus Figur 1;
- Figur 3:: eine Querschnittsansicht des Dübels aus Figur 1 an der Position A-A in Figur 2;
- Figur 4:: eine Querschnittsansicht des Dübels aus Figur 1 an der Position B-B in Figur 2; und
- Figur 5:: eine Querschnittsansicht des Dübels aus Figur 1 an der Position G-G in Figur 2.

Die Figuren zeigen ein Ausführungsbeispiel eines erfindungsgemässen Spreizankers. Der Spreizanker ist als Dämmstoffanker ausgebildet und weist als solcher einen Schaft 1 auf, an dessen rückwärtigen Ende ein Halteteller 2 zum Sichern einer Dämmstoffplatte am Schaft 1 angeordnet ist. Längs durch den Schaft 1 hindurch erstreckt sich im Schaftinneren ein Spreizkanal 5, welcher zum rückwärtigen Ende des Spreizankers hin offen ist.

Der Schaft 1 weist im Anschluss an sein vorderes Ende einen Spreizbereich 10 auf. Dieser Spreizbereich 10 ist durch Einführen eines nicht dargestellten stiftartigen Expansionselements zum Verankern an einer Bohrlochwand radial aufweitbar. Zwischen Spreizbereich 10 und Halteteller 2 weist der Schaft 1 einen Halsbereich 11 auf, der allenfalls eingeschränkt zum Aufweiten durch das Expansionselement vorgesehen ist.

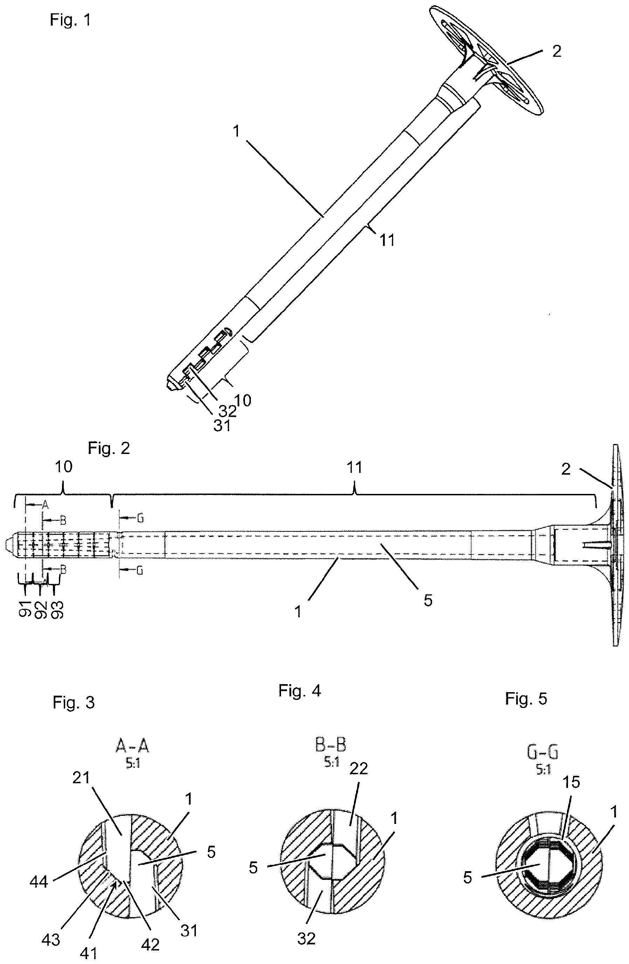

Wie insbesondere Figur 2 zeigt, weist der Spreizbereich 10 mehrere axial versetzte Spreizzonen auf, wobei beispielhaft drei benachbarte Spreizzonen mit den Bezugszeichen 91, 92 und 93 gekennzeichnet sind. In jeder der Spreizzonen 91, 92, 93 weist der Schaft 1 zwei gegenüberliegende Einstiche auf, die vom Schaftumfang ausgehen, von dort in das Schaftinnere führen und sich im Schaftinneren vorzugsweise treffen. Im Falle der Spreizzone 91 sind dies wie in Figur 3 gezeigt die Einstiche 21 und 31, und im Falle der Spreizzone 92 wie in Figur 4 gezeigt die Einstiche 22 und 32. Die Einstiche 21, 31, 22, 32 bilden im Spreizbereich 10 den Spreizkanal 5.

Wie insbesondere in Figur 1 erkennbar ist, sind die Einstiche 21 und 22 benachbarter Spreizzonen 91 und 92 in Umfangsrichtung des Schafts 1 versetzt zueinander angeordnet. Gleiches gilt für die in Figur 1 verdeckten Einstiche 31 und 32. Die Einstiche 21, 22, usw. einerseits und die Einstiche 31, 32, usw. andererseits sind jeweils periodisch angeordnet und bilden zwei rechteckfunktionsförmige Bahnen, die sich längs des Schafts 1 erstrecken, und die zwei Spreizzungen voneinander abgrenzen.

Wie insbesondere in Figur 5 gezeigt ist, ist am Übergang zwischen Spreizbereich 10 und Halsbereich 11 im Spreizkanal 5 eine Einschnürung 15 angeordnet, welche den Spreizkanal 5 lokal verjüngt und beispielsweise zur Zentrierung des Expansionselements im Spreizkanal 5 dienen kann.

Wie in Figur 3 gezeigt ist, ist die im Schaftinneren befindliche Stirnseite 41 des ersten Einstichs 21 der ersten Spreizzone 91 im Querschnitt A-A einfach abgewinkelt. Daher weist die Stirnseite 41 zwei Kontaktfacetten 42 und 43 für das Expansionselement auf, die sich im Querschnitt A-A spitzwinklig schneiden. Eine weitere Kontaktfacette 44 für das Expansionselement ist am Mantel des Einstichs 21 gebildet. Insgesamt weist der Einstich 21 somit drei winklig zueinander verlaufende Kontaktfacetten 42, 43, 44 auf. Der zweite Einstich 31 der ersten Spreizzone 91 ist im Querschnitt A-A um 180° drehsymmetrisch zum ersten Einstich 21 ausgebildet und weist somit ebenfalls drei winklig zueinander verlaufende Kontaktfacetten auf, die der Übersichtlichkeit halber nicht eigens mit Bezugszeichen versehen sind. Insgesamt wird der Spreizkanal 5 der ersten Spreizzone 91 im Querschnitt A-A daher durch sechs Kontaktfacetten begrenzt. Hierdurch ist eine besonders symmetrische Kräfteübertragung zwischen Expansionselement und Schaft 1 möglich, wobei die Kontaktfläche zwischen Expansionselement und Schaft klein sein kann.

Wie Figur 4 zeigt, sind auch die Einstiche 22 und 32 der zweiten Spreizzone 92 im Querschnitt B-B um 180° drehsymmetrisch ausgebildet und bilden im Querschnitt B-B insgesamt sechs Kontaktfacetten für das Expansionselement.

## Patentansprüche

1. Spreizdübel mit
einem Schaft (1), der einen Halsbereich (11) und einen Spreizbereich (10) aufweist, wobei der Spreizbereich (10) axial versetzt zum Halsbereich (11) angeordnet ist, und
einem Spreizkanal (5), der den Halsbereich (11) und den Spreizbereich (10) des Schafts (1) durchläuft,
wobei der Schaft (1) im Spreizbereich (10) durch Einführen eines Expansionselements in den Spreizkanal (5) zum Verankern des Spreizübels in einem Bohrloch radial aufweitbar ist,
wobei der Spreizkanal (5) im Spreizbereich (10) ausschliesslich durch Einstiche (21, 31, 22, 32) gebildet ist, die vom Schaftumfang ausgehen und in das Schaftinnere führen, und
wobei der Spreizkanal (5) in zumindest einer Querschnittsebene (A-A) des Spreizbereichs (10) durch zwei in der Querschnittsebene (A-A) zumindest teilweise versetzt zueinander verlaufende Einstiche (21, 31) gebildet wird, die von in der Querschnittsebene (A-A) entgegengesetzt liegenden Bereichen des Schaftumfangs ausgehen,
**dadurch gekennzeichnet,**
**dass** eine Stirnseite (41) zumindest eines der beiden Einstiche (21) zumindest zwei Kontaktfacetten (42, 43) für das Expansionselement bildet.

2. Spreizdübel nach Anspruch 1,
**dadurch gekennzeichnet,**
**dass** die beiden Einstiche (21, 31) zumindest bereichsweise prismenförmig oder pyramidenstumpfförmig sind, vorzugsweise jeweils mit rechteckiger Grundfläche.

3. Spreizdübel nach einem der vorstehenden Ansprüche,
**dadurch gekennzeichnet,**
**dass** in der Querschnittsebene (A-A) zumindest einer der beiden Einstiche (21, 31) durch einen von der Längsachse des Schafts (1) ausgehenden Radius begrenzt wird.

4. Spreizdübel nach einem der vorstehenden Ansprüche,
**dadurch gekennzeichnet,**
**dass** die beiden Einstiche (21, 31) in der Querschnittsebene (A-A) zumindest bereichsweise drehsymmetrisch sind.

5. Spreizdübel nach einem der vorstehenden Ansprüche,
**dadurch gekennzeichnet,**
**dass** der Spreizbereich (10) zumindest eine axial ausgedehnte Spreizzone (91) aufweist,
wobei der Spreizkanal (5) in jeder Querschnittsebene der Spreizzone (91) durch die beiden Einstiche (21, 31) gebildet wird, und wobei die beiden Einstiche (21, 31) in jeder Querschnittsebene der Spreizzone (91) von entgegengesetzt liegenden Bereichen des Schaftumfangs ausgehen.

6. Spreizdübel nach einem der vorstehenden Ansprüche,
**dadurch gekennzeichnet,**
**dass** der Spreizbereich (10) mehrere axial versetzte Spreizzonen (91; 92; 93) aufweist, wobei der Spreizkanal (5) in jeder der Spreizzonen (91; 92; 93) durch jeweils zwei Einstiche (21, 31; 22, 32) gebildet wird, die jeweils von entgegengesetzt liegenden Bereichen des Schaftumfangs ausgehen, wobei die Einstiche (21, 31; 22, 32) zumindest zweier benachbarter Spreizzonen (91; 92) in Umfangsrichtung des Schafts (1) zumindest bereichsweise zueinander versetzt sind.

7. Spreizdübel nach Anspruch 6,
**dadurch gekennzeichnet,**
**dass** zumindest ein Teil der Einstiche (21, 31; 22, 32) längs des Schafts (1) periodisch angeordnet ist.

8. Spreizdübel nach einem der vorstehenden Ansprüche,
**dadurch gekennzeichnet,**
**dass** der Spreizkanal (5) am Übergang zwischen dem Halsbereich (11) und dem Spreizbereich (10) eine Einschnürung (15) oder eine vom Expansionselement durchstossbare Membran aufweist.

9. Spreizdübel nach einem der vorstehenden Ansprüche,
**dadurch gekennzeichnet,**
**dass** er einen am Schaft (1) angeordneten Halteteller (2) zum Sichern einer Dämmstoffplatte am Schaft (1) aufweist.

10. Spritzgusswerkzeug zum Herstellen eines Spreizdübels nach einem der vorstehenden Ansprüche, bestehend aus zwei Formhälften und einer Kernnadel, wobei die Formhälften und die Kernnadel eine Negativform des Spreizdübels bilden.

## Claims

1. Expansion plug with
a shaft (1), which has a neck area (11) and an expansion area (10), in which the expansion area (10) is arranged axially offset to the neck area (11), and
an expansion channel (5), which runs through the neck area (11) and the expansion area (10) of the shaft (1),
in which the shaft (1) may be extended radially in the expansion area (10) by inserting an expansion element into the expansion channel (5) to anchor the expansion plug in a hole,
in which the expansion channel is formed exclusively by recesses (21, 31, 22, 32) in the expansion area (10), which go out from the circumference of the shaft and lead into the inside of the shaft, and
in which in at least one cross-sectional plane (A-A) of the expansion area (10) the expansion channel (5) is formed by two recesses (21, 31) running at least partly offset to each other in the cross-sectional plane (A-A), which go out from opposing areas of the circumference of the shaft in the cross-sectional plane (A-A),
**characterised in that**
a face (41) of at least of one of the two recesses (21) forms at least two contact facets (42, 43) for the expansion element.

2. Expansion plug according to claim 1,
**characterised in that**
both recesses (21, 31) are in the shape of a prism or a truncated pyramid at least in areas, preferably with a rectangular base area respectively.

3. Expansion plug according to one of the previous claims,
**characterised in that**
at least one of the two recesses (21, 31) is limited by a radius going out from the longitudinal axis of the shaft (1) in the cross-sectional plane (A-A).

4. Expansion plug according to one of the previous claims,
**characterised in that**
both recesses (21, 31) are rotationally symmetrical at least in areas in the cross-sectional plane (A-A).

5. Expansion plug according to one of the previous claims,
**characterised in that**
the expansion area (10) has at least one axially extended expansion zone (91),
in which the expansion channel (5) is formed by both recesses (21, 31) in each cross-sectional plane of the expansion zone (91) and in which both recesses (21, 31) go out from opposing areas of the circumference of the shaft in each cross-sectional plane of the expansion zone (91).

6. Expansion plug according to one of the previous claims,
**characterised in that**
the expansion area (10) has several axially offset expansion zones (91; 92; 93), in which the expansion channel (5) is formed by two recesses (21, 31; 22, 32) in each of the expansion zones (91; 92; 93) respectively, which go out from opposing areas of the circumference of the shaft respectively, in which the recesses (21, 31; 22, 32) of at least two neighbouring expansion zones (91; 92) are offset to each other at least in areas in the circumferential direction of the shaft (1).

7. Expansion plug according to claim 6,
**characterised in that**
at least a part of the recesses (21, 31; 22, 32) are arranged periodically along the shaft (1).

8. Expansion plug according to one of the previous claims,
**characterised in that**
at the transition between the neck area (11) and the expansion area (10) the expansion channel (5) has a constriction (15) or a membrane that may be pierced by the expansion element.

9. Expansion plug according to one of the previous claims,
**characterised in that**
it has a holding plate (2) arranged on the shaft (1) to secure an insulating board on the shaft (1).

10. Injection moulding tool for producing an expansion plug according to one of the previous claims, consisting of two mould halves and a core needle, in which the mould halves and the core needle form a negative mould of the expansion plug.

## Revendications

1. Cheville à expansion comportant :
une tige (1) comportant une partie de col (11) et une partie d'expansion (10), la partie d'expansion (10) étant agencée de manière axialement décalée par rapport à la partie de col (11), et
un canal d'expansion (5) traversant la partie de col (11) et la partie d'expansion (10) de la tige (1),
dans laquelle la tige (1) peut s'élargir radialement dans la partie d'expansion (10) en insérant un élément d'expansion dans le canal d'expansion (5) afin d'ancrer la cheville à expansion dans un trou percé,
dans laquelle le canal d'expansion (5) est formé dans la partie d'expansion (10) uniquement par des encoches (21, 31, 22, 32) qui débutent sur le pourtour de tige et mènent à l'intérieur de la tige, et
dans laquelle le canal d'expansion (5) est formé dans au moins un plan de coupe (A-A) de la partie d'expansion (10) par deux encoches (21, 31) s'étendant de manière au moins partiellement décalée l'une de l'autre dans le plan de coupe (A-A), lesquelles encoches débutent sur des parties du pourtour de tige opposées dans le plan de coupe (A-A),
**caractérisée** ce que
une face d'extrémité (41) d'au moins une des deux encoches (21) forme au moins deux facettes de contact (42, 43) pour l'élément d'expansion.

2. Cheville à expansion selon la revendication (1),
**caractérisée en ce que**
les deux encoches (21, 31) ont au moins en partielle une forme de prisme ou de pyramide tronquée, de préférence respectivement avec une surface de base rectangulaire.

3. Cheville à expansion selon l'une des revendications précédentes,
**caractérisée en ce que**
dans le plan de coupe (A-A), au moins l'une des deux encoches (21, 31) est limitée par un rayon partant de l'axe longitudinal de la tige (1).

4. Cheville à expansion selon l'une des revendications précédentes,
**caractérisée en ce que**
les deux encoches (21, 31) ont au moins partiellement une symétrie de rotation dans le plan de coupe (A-A) .

5. Cheville à expansion selon l'une des revendications précédentes,
**caractérisée en ce que**
la partie d'expansion (10) comporte au moins une zone d'expansion axialement étendue (91),
dans laquelle le canal d'expansion (5) dans chaque plan de coupe de la zone d'expansion (91) est formé par les deux encoches (21, 31), et dans laquelle les deux encoches (21, 31) dans chaque plan de coupe de la zone d'expansion (91) débutent sur des parties opposées du pourtour de tige.

6. Cheville à expansion selon l'une des revendications précédentes,
**caractérisée en ce que**
la partie d'expansion (10) comporte plusieurs zones d'expansion axialement décalées (91 ; 92 ; 93), dans laquelle le canal d'expansion (5) dans chacune des zones d'expansion (91 ; 92 ; 93) est formé par deux encoches (21, 31 ; 22 , 32) respectivement qui débutent respectivement sur des parties opposées du pourtour de tige, dans laquelle les encoches (21, 31 ; 22 , 32) d'au moins deux zones d'expansion (91 ; 92) voisines sont au moins partiellement décalées l'une par rapport à l'autre dans la direction du pourtour de la tige (1).

7. Cheville à expansion selon la revendication 6,
**caractérisée en ce que**
au moins une partie des encoches (21, 31 ; 22, 32) est agencée périodiquement le long de la tige (1).

8. Cheville à expansion selon l'une des revendications précédentes,
**caractérisée en ce que**
le canal d'expansion (5) comporte, au niveau de la transition entre la partie de col (11) et la partie d'expansion (10), un rétrécissement (15) ou une membrane pouvant être transpercée par l'élément d'expansion.

9. Cheville à expansion selon l'une des revendications précédentes,
**caractérisée** ce que
elle comporte un disque de support (2) agencé sur la tige (1) pour sécuriser un panneau isolant sur la tige (1).

10. Moule à injection pour fabriquer une cheville à expansion selon l'une des revendications précédentes, constitué de deux demi-moules et d'une carotte centrale, dans lequel les demi-moules et la carotte centrale forment un moule négatif de la cheville à expansion.
